## Europäisches Patentamt
## European Patent Office
## Office européen des brevets

(19)

(11) Veröffentlichungsnummer: **0 247 388**
**B1**

(12) # EUROPÄISCHE PATENTSCHRIFT

(45) Veröffentlichungstag der Patentschrift:
07.02.90

(51) Int. Cl.⁴: **F02K 9/78**, F02K 9/48
// F02C7/143

(21) Anmeldenummer: 87106375.6

(22) Anmeldetag: 30.04.87

(54) **Luftatmungsfähiges Raketenantriebssystem.**

(30) Priorität: 30.05.86 DE 3617757

(43) Veröffentlichungstag der Anmeldung:
02.12.87 Patentblatt 87/49

(45) ˜ Bekanntmachung des Hinweises auf die Patenterteilung:
07.02.90 Patentblatt 90/6

(84) Benannte Vertragsstaaten:
FR GB IT

(56) Entgegenhaltungen:
FR-A- 2 218 485
GB-A- 999 581
US-A- 3 002 340
US-A- 3 705 496
US-A- 3 768 254

SPACELIGHT, Band 14, Nr. 11, November 1972,
Seiten 413-416, GB; W.J.D. ESCHER: "Synerjet: beyond
the shuttle"
TECHNISCHE RUNDSCHAU, Band 67, Nr. 49, 25.
November 1975, Seiten 9-11, DE; H. KÜNKLER:
"Luftatmende Strahlantriebe für Raumfahrzeugträger"

(73) Patentinhaber: ERNO Raumfahrttechnik Gesellschaft
mit beschränkter Haftung, Hünefeldstrasse 1-5,
D-2800 Bremen 1(DE)

(72) Erfinder: Spies, Johann, Johann-Eilers-Weg 2,
D-2805 Stuhr 4(DE)

(74) Vertreter: Schramm, Ewald Werner Josef,
Messerschmitt-Bölkow-Blohm GmbH Patentabteilung
TM 43 HB Hünefeldstrasse 1-5 Postfach 10 78 45,
D-2800 Bremen 1(DE)

## Beschreibung

Die Erfindung bezieht sich auf ein luftatmungsfähiges und mit kryogenen Treibstoffen arbeitendes Raketenantriebssystem für den Einsatz in Raumfahrzeugträgersystemen und in Über- und Hyperschallflugsystemen.

In Raumfahrzeugträgersystemen werden zur Zeit nur Raketenantriebssysteme eingesetzt, die sowohl den Brennstoff als auch den Oxidator mit sich führen. Innerhalb der Atmosphäre können, ähnlich wie bei Über- und Hyperschallflugsystemen, jedoch auch luftatmende Antriebseinrichtungen für den Vortrieb der Raumfahrzeugträgersysteme eingesetzt werden.

Raketenantriebe sind außenluftunabhängig; sie führen sowohl Brennstoff als auch den zur Verbrennung notwendigen Oxidator mit sich. Ihren unbestreitbaren Vorteilen wie Startfähigkeit aus dem Stillstand, Einsatzeignung im gesamten Geschwindigkeits- und Höhenbereich der Flugmission, Kompaktheit, große Schubdichte (ca. 20–200 N/cm$^2$) und relativ geringe schubspezifische Masse (ca. 1 –2 kg/kN) stehen als entscheidender Nachteil der große spezifische Treibstoffverbauch von ca. 0,25 kg/kNs entgegen. Dieser Treibstoffverbrauch wird bei der Verwendung der heutzutage bevorzugten kryogenen Treibstoffpaarungen wie Flüssigwasserstoff (LH$_2$) und Flüssigsauerstoff (LOX) zu rund 80% vom Oxidator bestimmt. Auf diese Weise angetriebene Trägersysteme verbauchen etwa 50% ihres gesamten Treibstoffvorrates für den beschleunigten Aufstieg durch die untere dichte Atmosphäre bis auf Fluggeschwindigkeiten in der Größenordnung von 1500–1800 m/s (Mach 5–6). Mit dem verbliebenen Treibstoffvorrat beschleunigen sie bis auf die Orbitalgeschwinigkeit von ca. 7600 m/s.

Der große Treibstoffbedarf für den beschleunigten Aufstieg durch die Atmosphäre führt zu Trägerfahrzeugen mit geringem Nutzmassenverhältnis und großer Startmasse. Er erfodert die Installation schubstarker und damit trotz der geringen schubspezifischen Masse schwerer Triebwerke und drängt die aus Gründen operativer Einfachheit, Sicherheit un geringen Betriebskosten angestrebten einstufigen Trägersysteme an den Rand des derzeit mit großem Entwicklungsrisiko technologisch Machbarem. Als ein weiterer operativer Nachteil rein raketengetriebener Trägersysteme ist mangelnde selbständige Transferfähigkeit zwischen verschiedenen Orten anzusehen, wie zum Beispiel zwischen Werft und Startgelände oder Landeplatz und Startplatz/Werft.

Luftatmende Antriebe entnehmen den zur Verbrennung benötigten Sauerstoff mittels geeignet ausgebildeter Lufteinläufe der Umgebung. Sie zeichnen sich demzufolge durch einen relativ geringen Treibstoffverbrauch (ca. 0,02 Kg/kNs) aus. Nachteilig sind die großen Abmessungen, die verhältnismäßig geringe Schubdichte, die relativ große schubspezifische Masse (ca. 10 kg/kN) und die für den außenluftunabhängigen Betrieb in großer Höhe erforderliche Komplettierung mit Raketentriebwerken.

Bekannte Vertreter der luftatmenden Strahlantriebe sind die für den hohen Unterschall- und mäßigen Überschallbereich verwendeten Turbinen-Luftstrahltriebwerke (TL), die für den Überschallgeschwindigkeitsbereich geeigneten konventionellen Staustrahltreibwerke mit Unterschallverbrennung, mit Überschall durchströmte Staustrahltriebwerke mit Überschallverbrennung (SCRAMJET) für den hohen Überschall- und Hyperschallbereich, sowie eine Vielzahl sogenannter Kombinationstriebwerke wie zum Beispiel Turbo-Staustrahltriebwerk (TURBORAMJET), Turbo-Raketentriebwerke und Mantel-Staustrahl-Raketenantriebe.

In TL-Triebweken übernimmt ein turbinengetriebener Verdichter die Förderung der Verbrennungsluft in der Brennkammer. Derartige Triebwerke, sind mit und ohne Nachbrennkammer aus dem Stillstand einsetzbar, ihre Schubdichte ist jedoch gering und ihre schubspezifische Masse ist mit rund 10 kg/kN für die vorgesehene Antriebsaufgabe viel zu groß. Zudem ist der Einsatzbereich derartiger TL-Triebwerke bedingt durch Verdichtungsprobleme auf dem mäßigen Überschallbereich beschränkt.

In Staustrahltriebwerken übernimmt ein Stoßdiffusor die Kompression der eingefangenen Verbrennungsluft. Derartige Strahltriebwerke können keinen Standschub entwickeln und benötigen daher einen Raketen- oder TL-Antrieb zur Vorbeschleunigung auf ihre jeweilige Transitionsgeschwindigkeit. Die mit steigender Flugmachzahl rasch anwachsende Stautemperatur der Luft begrenzt den Einsatzbereich konventioneller Staustrahltriebwerke mit Unterschallverbrennung auf etwa Mach 7. Größere Fluggeschwindigkeiten erfordern entweder einen Raketenantrieb oder den Übergang zu Staustrahltriebwerken mit Überschallverbrennung. Derartige als SCRAMJET bezeichnete Staustrahltriebwerke umgehen die mit der Verzögerung von Hyperschall auf Unterschall verbundenen thermischen Probleme und die extreme Ruhedruckverluste dadurch, daß die ankommende Hyperschallströmung im Einlaufdiffusor lediglich auf mäßige Überschallgeschwindigkeit verzögert wird. Realisierung und Erprobung eines SCRAMJET-Antriebes erfordern eine aufwendige und riskante Entwicklung, sowie aufgrund existierender physikalisch-technischer Leistungsgrenzen der Windkanäle einen fliegenden Erprobungsträger für den Hyperschallbereich.

Sowohl konventionelle Staustrahltriebwerke mit Unterschallverbrennung als auch SCRAMJETS zeichnen sich innerhalb eines relativ weiten Machzahlbereiches durch geringen spezifischen Treibstoffverbrauch aus, ihre Schubdichte ist im Mittel jedoch gering und ihre schubspezifische Masse ist relativ groß.

Dem Nachteil der mangelnden Selbststartfähigkeit wird in den bekannten Realisierungskonzepten durch die Intergration eines Raketenantriebes begegnet, welches sowohl die Vorbeschleunigung bis zum Übergang in den Staustrahlbetrieb als auch die beim Einsatz in Trägersystemen daran anschließende Endbeschleunigung bis auf Orbitalgeschwindigkeit liefern soll. Insbesondere für einstufige Raumfahrtträgersysteme verbietet sich im allgemeinen die Verwendung verschiedenartiger, nur zeitweise arbeitender Triebwerke, weil jedes Antriebsaggregat nach Beendigung seiner Betriebsphase nutzloses Zusatzgewicht darstellt, das die Nutzlastkapazität des Trägersystems verringert.

Aufstiegsrechnungen zeigen, daß ein auf etwa 5–6 Mach vorbeschleunigtes einstufiges Trägersystem mit einem kryogenen Raketenantrieb ohne weiteres in eine Erdumlaufbahn gebracht werden kann, sofern das zur Vorbeschleunigung verwendete Antriebsaggregat dafür nicht mehr als rund 20% der mitgeführten Treibstoffmasse verbraucht und die zusätzlich für den luftatmenden Betrieb erforderliche schubspezifische Masse etwa 6 kg/kN nicht übersteigt.

Ziel der vorliegenden Erfindung ist es, ein luftatmungsfähiges Raketenantriebsaggregat zu entwickeln, das unter Vermeidung der jeweiligen antriebsartspezifischen Nachteile die Vorzüge eines reinen Raketenantriebes mit denjenigen luftatmender Turboluftstrahl- und Staustrahltriebwerke in sich vereinigt.

Erfindungsgemäß wird diese Aufgabe dadurch gelöst, daß eine kryogene Treibstoffpaarung, vorzugsweise LH$_2$/LOX, verwendet wird, und daß Elemente der drei klassischen Strahltriebwerke (Raketentriebwerk, TL-Triebwerk, Staustrahltriebwerk), zusammen mit klassischen Elementen der Verfahrens- und Prozeßtechnik zu einem einheitlichen Antriebsaggregat zusammengefaßt werden, welches sowohl luftatmenden als auch reinen Raketenantrieb sowie einen Mischbetrieb ermöglicht.

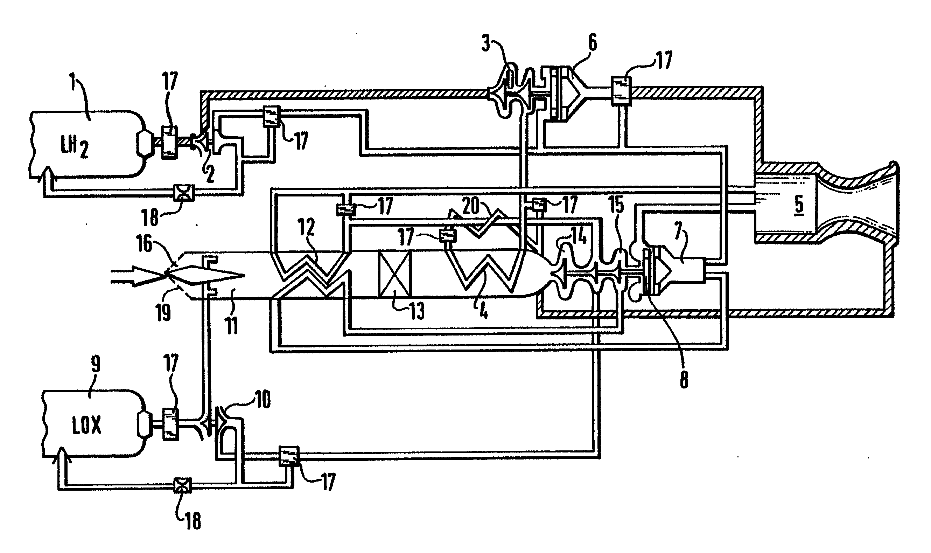

Die Lösung dieser Aufgabe läßt sich mit Hilfe der Figur 1 veranschaulichen. Im einzelnen zeigen:

Figur 1 ein Blockschaltbild des Antriebs

Im reinen luftatmenden Betrieb ist Ventil 17 am Oxidatortank 9 geschlossen, die Oxidatorpumpe 10 stillgelegt, der Oxidatoreinspritzer 11 geschlossen und die optionalen Lufteinlaufklappen 19 sind geöffnet. Luft mit variablem, von Machzahl und Höhe abhängigen Zustand (Temperatur, Druck, Wasserdampfgehalt) tritt durch den vorzugsweise als Mehrstoßdiffusor ausgebildeten Lufteinlauf 16 in das Aggregat ein, passiert den Oxidator-Einspritzer 11 und durchströmt unter Abkühlung den Vorkühler 12. Durch entsprechende Bemessung sowie durch Steuerung des Kühlmittelstroms wird eine in geringen Höhen wegen des dort vorhandenen Wasserdampfes funktionsentscheidende Vorkühlung unter den Taupunkt des Wasserdampfes erzielt.

In einem nachgeschalteten Wasserabscheider 13 wird die vorgekühlte Luft getrocknet, ehe sie den kryogenem Brennstoff gespeisten Kryogenkühler 4 durchströmt, wo sie so tief wie möglich, jedoch nicht unter ihren Taupunkt abgekühlt wird, ehe sie in den Hauptverdichter 14 gelangt. Durch diese starke Unterkühlung der Luft werden zum einen Leistungsbedarf, Stufenzahl, Abmessungen und Masse der beiden Verdichter 14 und 15 stark verringert, zum anderen wird der Einfluß der Fluggeschwindigkeit auf die Leistungs- und Funktionsfähigkeit der Verdichtergruppe stark abgeschwächt. Nach dem Hauptverdichter 14 wird der Luftstrom aufgeteilt. Der größere Anteil gelangt über den bereits erwähnten regenerativen Vorkühler 12 direkt in die Brennkammer 5, der kleinere Anteil wird einer Hochdruckverdichterstufe 15 zugeleitet und von dort ebenfalls durch den regenerativen Vorkühler 12 in den Hochdruckgasgenerator 7 gefördert. Der Brennstoff, vorzugsweise Wasserstoff, wird durch ein entsprechendes Leitungssystem einer Hauptpumpe 3 zugeführt und auf hohen Druck gefördert. Durch den Kryogenkühler 4 und den Kühlmantel der Brennkammer 5 gelangt der aufgeheizte Brennstoff in die Brennstoffturbine 6, und von dort aus in den Hochdruckgasgenerator 7. Im Hochdruckgasgenerator 7 verbrennt der gasförmige Brennstoff mit dem eingespeisten Luft-Teilstrom. Das Mischungsverhältnis des Hochdruckgasgenerators 7 wird so gewählt, daß die Gastemperatur die zulässige Turbineneintritts-Temperatur nicht überschreitet. Das vorverbrannte brennstoffreiche Gas treibt die Hauptturbine 8 an, von der es in die Brennkammer 5 geleitet wird, wo es mit dem größeren über den regenerativen Vorkühler 12 direkt eingespeisten Luftteilstrom verbrennt und in der zur Brennkammer 5 gehörige Schubdüse expandiert.

Die gewählte Anordnung von Vor- und Hauptkühler entlastet zum einen den Kryogenkühler 4 und sorgt damit für eine ausreichende Kühlung der Brennkammer 5. Zum anderen ermöglicht die gewählte Anordnung des regenerativen Vorkühlers 12 im luftatmenden Betrieb eine sichere Trocknung der Luft im Wasserabscheider 13 und sichert durch Rückführung der in den Verdichtern 14, 15 entstandenen Kompressionswärme im reinen Raketenbetrieb die Verdampfung des über dem Oxidatoreinspritzer 11 zugeführten Oxidators (vorzugsweise flüssiger Sauerstoff). Die Effektivität des regenerativen Vorkühlers 12 wird durch Vorschaltung eines Rohrwärmetauschers 20 erhöht.

Im reinen Raketenbetrieb sind die Lufteinlaßklappen 19 geschlossen und Ventil 17 am Oxidatortank sowie Oxidatoreinspritzer 11 geöffnet. Die Oxidatorpumpe 10 fördert den Tank 9 entnommenen Oxidator durch den Oxidatoreinspritzer 11 in das Antriebsaggregat, wo er im nun als Verdampfer wirkenden regenerativen Vorkühler 12 verdampft. Nach dem Passieren des nun wirkungslosen Wasserabscheiders 13 durchströmt der Oxidatordampf den Kryogenkühler 4, der in dieser Betriebsweise ebenso wie der Rohrwärmetauscher 20 zur Vermeidung einer unerwünschten erneuten Kondensation (Eisbildung) mittels einer Bypass-Leitung nicht von Kühlmittel durchströmt wird. Die weitere Verarbeitung von Oxidator und Brennstoff erfolgt ebenso wie in der Luftatmenden Betriebsweise.

Für den Übergang von der luftatmenden zur reinen Raketenbetriebsart bietet sich ein Mischbetrieb an, bei dem dem Antriebsaggregat sowohl Luftsauerstoff als auch mitgeführter Oxidator zugeführt wird. Dieser Mischbetrieb bietet folgende Vorteile:

Gleitender Übergang von der einen in die andere zuvor beschriebene Betriebsart ohne abruptes Umschalten.

Erweiterung des teilweise luftgestützten Betriebs in Richtung höherer Fluggeschwindigkeiten und damit eine Verringerung des mitzuführenden Oxidators.

Erhöhung der Nutzlastkapazität.

In einer weiteren vorteilhaften Ausgestaltung der Erfindung wird anstelle des regenerativen Vorkühlers 12 ein rekuperativer Vorkühler eingesetzt, der in seiner Bauform kompakter und gegebenenfalls leichter ist. Zudem ist anstelle des Hauptverdichters 14 und der Hauptturbine 8 ein Druckwellenkompressor einsetzbar.

## Patentansprüche

1. Luftatmungsfähiges Raketenantriebssystem für den Antrieb eines Raumfahrzeugträgers sowohl innerhalb als auch außerhalb der Atmosphäre, bei dem ein luftatmender Betrieb mit Umgebungsluft durch einen das Antriebssystem versorgenden Lufteinlauf (16) erfolgt, von dem die erfaßte Luft über einen die bei der Einlaufkompression entstandene starke Erwärmung abführenden regenerativen Vorkühler (12) einen Wasserabscheider (13) einem nachgeschalteten Kryogenkühler (4) zugeführt ist, der die eingeströmte Luft höchstens bis zum Erreichen der Verflüssigungstemperatur abkühlt und die abgekühlte Luft in einen Hauptverdichter (14) weiterleitet, von den ein größerer Anteil der vorverdichteten Luft den regenerativen Vorkühler (12) speist, während der kleinere Anteil der vorverdichteten Luft einem Hochdruckverdichter (15) zugeführt wird, und dieser so hochverdichtete Luftanteil über einen zweiten Leitungsstrang den regenerativen Vorkühler (12) speist, und anschließend in einem Hochdruckgasgenerator (7) mit einem aus einem Brennstofftank (1) über ein Ventil (17), eine Brennstoffpumpe (3), den Kryogenkühler (4), den Kühlmantel einer Brennkammer (5), und eine Brennstoffturbine (6) zugeführten kryogenen Brennstoff vermischt und vorverbrannt wird, daß das vorverbrannte Gas über eine Hauptturbine (8) in die Brennkammer (5) gelangt, um dort mit dem größeren über den regenerativen Vorkühler (12) in die Brennkammer (5) gelangenden vorkomprimierten Luftanteil zu verbrennen, daß im reinen Raketenbetrieb der Oxidator einem Tank (9) über ein Ventil (17) und eine Vorpumpe (10) einem Oxidator-Einspritzer (11) zugeführt wird, um danach im regenerativen Vorkühler (12), der in dieser Betriebsart als Oxidator-Verdampfer wirkt, zu verdampfen, wobei der Kryogenkühler (4) in dieser Betriebsart durch einen Bypass überbrückt ist damit der Oxidator wie im luftatmenden Betrieb in das Antriebssystem weitergeleitet und mit dem aus dem Brennstofftank (1) zugeführten kryogenen Brennstoff verbrannt wird, und daß bei einem Mischbetrieb sowohl oxidatorhaltige Umgebungsluft, als auch dem Tank (9) entnehmbarer Oxidator vor dem regenerativen Vorkühler (12) miteinander vermischt werden.

2. Antriebssystem nach Anspruch 1, bei dem nach der Brennstoffturbine (6) ein kleiner Teil des kryogenen Brennstoffes zu einer wahlweise vorhandenen Vorpumpe (2) befördert wird um diese anzutreiben.

3. Antriebssystem nach Anspruch 2, bei dem der kryogene Brennstoff von der Antriebsturbine der Vorpumpe (2) über ein Regelventil (18) zurück in den Brennstofftank (1) befördert wird.

4. Antriebssystem nach Anspruch 1, bei dem ein kleiner Teil des Oxidators nach dem Hauptverdichter (14) über das Ventil (17) zur Oxidatorpumpe (10) geleitet wird um diese anzutreiben.

5. Antriebssystem nach Anspruch 4, bei dem der Oxidator von der Antriebsturbine der Vorpumpe (10) über ein Regelventil (18) zurück in den Oxidatortank (9) befördert wird.

6. Antriebssystem nach Anspruch 1, bei dem der Lufteinlauf (16) wahlweise offen oder geschlossen ist.

7. Antriebssystem nach Anspruch 1, bei dem über einen Rohrwärmetauscher (20) die Zuleitungen vom Hauptverdichter (14) zum regenerativen Vorkühler (12) wahlweise vorgekühlt werden.

8. Antriebssystem nach Anspruch 1, bei dem anstelle des regenerativen Vorkühlers (12) ein rekuperativer Vorkühler eingesetzt wird.

9. Antriebssystem nach Anspruch 1, bei dem anstelle von Hauptverdichter (14) und Hauptturbine (8) ein Druckwellenkompressor eingesetzt wird.

10. Antriebssystem nach Anspruch 1, bei dem ein Lufteinlauf mit starrer Geometrie verwendet wird.

## Claims

1. An air breathing rocket drive system for driving a space vehicle carrier both inside and outside the atmosphere, in which air breathing mode is effected with surrounding air by means of an air inlet (16) which supplies the drive system, by which the detected air is supplied via a regenerative pre-cooler (12), which carries away the powerful heat which has arisen during the inlet compression, and a water separator (13), to a downstream cryogenic cooler (4) which cools off the air flowing in only until the liquefaction temperature is reached and passes on the cooled air into a main compressor (14), from which a larger proportion of the pre-compressed air is fed to the regenerative pre-cooler (12), while the smaller proportion of the pre-compressed air is supplied to a high pressure compressor (15); the then highly compressed proportion of air feeds the regenerative pre-cooler (12) via a second line branch, and is subsequently mixed and pre-combusted in a high pressure gas generator (7) with a cryogenic fuel supplied from a fuel tank (1) via a valve (17), a fuel pump (3), the cryogenic cooler (4), the cooling sleeve of a furnace (5) and a fuel turbine (6); that the pre-combusted gas reaches the combustion chamber (5) via a main turbine (8), so as to burn up there with the fairly large pre-compressed proportion of air reaching the combustion chamber (5) via the regenerative pre-cooler (12); that in the pure rocket mode the oxidiser is supplied to a tank (9) via a valve (17) and via a pre-pump (10) to an oxidiser spray (11), so as to vaporise thereafter in the regenerative pre-cooler (12), which acts in this mode of operation as an oxidiser vaporiser; in which the cryogenic cooler (4) is bridged in this mode of operation by a bypass filter so that the oxidiser is passed on to the drive system as in the air breathing mode and is combusted with the cryogenic fuel supplied from the fuel tank (1), and that in mixed operation both the oxidiser-containing surrounding air and the oxidiser which may be taken from the tank (9) also are mixed together prior to the regenerative pre-cooler (12).

2. A drive system according to claim 1, in which after the fuel turbine (6) a small part of the cryogenic fuel is conveyed to an optional pre-pump (2) in order to drive it.

3. A drive system according to claim 2, in which the cryogenic fuel is conveyed by the drive turbine of the pre-pump (2) via a control valve (18) back into the fuel tank (1).

4. A drive system according to claim 1, in which a small part of the oxidiser is passed after the main compressor (14) via the valve (17) to the oxidiser pump (10) in order to drive it.

5. A drive system according to claim 4, in which the oxidiser is conveyed back into the oxidiser tank (9) by the drive turbine of the pre-pump (10) via a control valve (18).

6. A drive system according claim 1, in which the air inlet (16) is optionally open or closed.

7. A drive system according to claim 1, in which the supply lines from the main compressor (14) to the regenerative pre-cooler (12) are optionally precooled by means of a pipe heat exchanger (20).

8. A drive system according to claim 1, in which instead of the regenerative pre-cooler (12) a recuperative pre-cooler is used.

9. A drive system according to claim 1, in which instead of main compressor (14) and main turbine a compression shaft compressor is used.

10. A drive system according to claim 1, in which an air inlet with rigid geometry is used.

**Revendications**

1. Système de propulsion par fusée susceptible d'utiliser l'air atmosphérique pour l'entraînement d'un porteur d'engin spatial à la fois dans l'atmosphère et à l'extérieur de l'atmosphère terrestre, avec un fonctionnement utilisant l'air ambiant alimentant par une entrée d'air (16), le système de propulsion, l'air ainsi reçu étant fourni par un radiateur amont (12) à régénération évacuant la forte chaleur engendrée à la compression d'entrée, un séparateur d'eau (13) vers un radiateur cryogénique aval (4) qui refroidit l'air d'entrée au maximum jusqu'à la température de liquéfaction et transfère l'air ainsi refroidi à un compresseur principal (14), une grande partie de l'air pré-comprimé alimentant le radiateur amont à régénération (12) alors que l'autre partie de l'air pré-comprimé est fournie à un compresseur haute pression (15), et cette partie d'air ainsi fortement comprimée alimente par une seconde ligne de puissance, le radiateur amont à régénération (12) puis est mélangée dans un générateur de gaz haute pression (7) à un combustible cryogénique fourni à partir d'un réservoir de carburant (1), par une soupape (17), une pompe à carburant (3) et le radiateur cryogénique (4), à la chemise de refroidissement d'une chambre de combustion (5) et à une turbine à carburant (6) pour une pré-combustion, et le gaz de cette pré-combustion passe dans la chambre de combustion (5) par l'intermédiaire d'une turbine principale (8), chambre où il est brûlé avec la plus grande partie de l'air, pré-comprimé qui arrive dans cette chambre de combustion (5) à travers le radiateur amont (12) à régénération, et en ce que pour le régime en fusée simple, l'agent oxydant est fourni à partir d'un réservoir (9) par une soupape (17) et une pompe (10) à un injecteur d'agent oxydant (11) pour s'évaporer dans le radiateur amont (12) à régénération qui fonctionne pour ce régime comme vaporisateur d'agent oxydant, le radiateur cryogénique (4) étant court-circuité pour ce régime de fonctionnement pour dévier ainsi l'agent oxydant vers le moteur comme pour le fonctionnement utilisant l'air extérieur pour y être brûlé avec le carburant cryogénique fourni à partir du réservoir (1), et en ce que pour un régime mixte on mélange à la fois l'air ambiant contenant de l'agent oxydant et l'agent oxydant pris dans le réservoir (9) avant de passer dans le radiateur amont (12) à régénération.

2. Système de propulsion selon la revendication 1, caractérisé en ce qu'en aval de la turbine (6) à combustible, une faible partie du combustible cryogénique est transférée vers une pompe amont (12) existant sélectivement pour entraîner cette pompe.

3. Système de propulsion selon la revendication 2, caractérisé en ce que le combustible cryogénique est transféré de la turbine d'entraînement de la pompe amont (2) par une vanne de régulation (18) en retour dans le réservoir de carburant (1).

4. Système de propulsion selon la revendication 1, caractérisé en ce qu'une petite partie de l'agent oxydant est dirigée vers le compresseur principal (14) par l'intermédiaire de la soupape (17) et vers la pompe d'agent oxydant (10) pour entraîner cette pompe.

5. Système de propulsion selon la revendication 4, caractérisé en ce que l'agent oxydant est transféré de la turbine d'entraînement de la pompe amont (10) par l'intermédiaire d'une vanne de régulation (18) en retour vers le réservoir d'agent oxydant (9).

6. Système de propulsion selon la revendication 1, caractérisé en ce que l'entrée de l'air (16) est ouverte ou fermée de manière commandée.

7. Système de propulsion selon la revendication 1, caractérisé en ce que les conduites d'alimentation du compresseur principal (14) vers le radiateur amont (12), à régénération, sont refroidies sélectivement par l'intermédiaire d'un échangeur à tube (20).

8. Système de propulsion selon la revendication 1, caractérisé par un radiateur amont, à récupération, remplaçant le radiateur amont (12) à régénération.

9. Système de propulsion selon la revendication 1, caractérisé par un compresseur à onde de pression à la place du compresseur principal (14) et de la turbine principale (8).

10. Système de propulsion selon la revendication 1, caractérisé en ce qu'il comporte une entrée d'air à géométrie fixe.